Europäisches Patentamt

European Patent Office

Office européen des brevets

(11) Publication number: **0 053 301**
**B1**

# EUROPEAN PATENT SPECIFICATION

(45) Date of publication of patent specification: **15.05.85**

(21) Application number: **81109540.5**

(22) Date of filing: **05.11.81**

(51) Int. Cl.⁴: **C 22 C 32/00, B 22 F 1/02,**
**F 16 C 33/04**

(54) Method of producing aluminium base sintered body containing graphite.

(30) Priority: **25.11.80 JP 164503/80**

(43) Date of publication of application:
**09.06.82 Bulletin 82/23**

(45) Publication of the grant of the patent:
**15.05.85 Bulletin 85/20**

(84) Designated Contracting States:
**DE FR GB**

(56) References cited:
**FR-A-1 540 125**
**GB-A-1 215 002**
**US-A-3 781 170**
**US-A-3 885 959**

(73) Proprietor: **NISSAN MOTOR COMPANY,**
**LIMITED**
**No.2, Takara-cho, Kanagawa-ku**
**Yokohama-shi Kanagawa-ken 221 (JP)**

(72) Inventor: **Matsuyama, Akira**
**No. 3-68, Oppama-Higashicho**
**Yokosuka City (JP)**
Inventor: **Seino, Hiroshi**
**Isogodai Paaku Haitsu 11-204 150-4 Hitorizawa-cho**
**Isogo-ku Yokohama City (JP)**
Inventor: **Maki, Yoshihiro**
**No. 2-92-6, Urago-cho**
**Yokoshuka City (JP)**
Inventor: **Hokazono, Yasuji**
**No. 3-68, Oppama-Higashicho**
**Yokosuka City (JP)**
Inventor: **Oaku, Takaaki**
**No.3-5-20, Nakahara**
**Isogo-ku Yokohama City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

This invention relates to a method of producing a sintered body which comprises aluminum as a principal material thereof and graphite as a lubricating additive, of the type as indicated in the precharacterising clause of claim 1.

A method of this type is shown in US—A—3781170 which discloses a process for producing a sintered body wherein a mixture comprising a major amount of aluminum powders and a minor amount of copper-coated carbonaceous material which can consist of graphite, is compacted into a desired shape and sintered in a non-oxidizing atmosphere. Said copper-coated graphite is used in the form of hollow microspheres.

As the effect of using a copper-coated graphite powder, there is no possibility of the surfaces of the aluminum or aluminum alloy particles being directly covered with graphite particles during mixing of the powder materials and compacting of the powder mixture. Accordingly, graphite in the powder mixture does not exhibit an inhibiting effect on sintering of the compacted powder mixture, and therefore good sintering of the compacted powder mixture can be accomplished with satisfactorily high mechanical strength of the sintered body. Furthermore, during the sintering process an eutectic reaction takes places between aluminum in the compacted powder mixture and copper present on the surfaces of the graphite particles to form a liquid phase at a temperature considerably lower than the melting point of aluminum. This liquid phase is quite favourable for smooth proceeding of good sintering, so that it becomes unnecessary to employ a sintering temperature higher than the melting point of aluminum.

It is an object of the present invention to improve the conventional method of producing a sintered body which comprises aluminum as its principal material and graphite as a lubricating or anti-frictional additive. In particular, the claimed invention intends to give an accurately shaped sintered body with strong bonding of graphite to the aluminum component in the sintered body and with high hardness and mechanical strengths of the sintered body.

In the present invention it is requisite that the content of copper in the copper-coated graphite powder is at least 20% by weight, and that the content of graphite in the powder mixture to be sintered is in the range of 2.0 to 10.0% by weight. It is requisite that the entire quantity of graphite as a raw material is in the form of a copper-coated graphite powder, but it is optional to additionally introduce a copper powder into the powder mixture. Whether a copper powder is used or not, the content of total copper in the powder mixture is in the range from 2.0 to 10.0% by weight. Furthermore, in the present invention the powder mixture comprises magnesium amounting to 0.2 to 2.0% by weight of said powder mixture. In addition, said powder mixture must comprise silicon amounting to 0.5 to 25% by weight of said powder mixture.

Owing to the above described effects of copper coated on the graphite particles, the method of the invention gives a sintered body sufficiently high in hardness and mechanical strength with little changes in the shape of the compact subjected to sintering. Even when the sintered body is used as a metal part making sliding contact with another metal part, the sintered body exhibits a long service life because graphite exposed on the contacting surface of this body does not easily separate from that surface. The sintered body can be obtained with high accuracy in its dimensions even when having a relatively intricate shape, so that in some cases the sintered body in the state as sintered serves as a practical metal part without the need of any additional finish procedure. The possibility of accomplishing sintering at a relatively low temperature is also an advantage of the method of the invention from the viewpoint of saving energy.

For example, the sintering method according to the invention is applicable to the production of bearings, cylinder liners, current collectors, and side plates of oil pumps.

To enhance the abrasion resistance of the sintered body, the above indicated amount of silicon is added to the powder mixture to be compacted and sintered together with the above indicated amount of magnesium. In the case of adding a relatively large amount of silicon it is desirable to use an Al-Si alloy powder as the source of Si.

In the present invention, graphite is incorporated into a powder composition to be compacted and sintered for the purpose of improving the lubricating or anti-frictional property of the sintered body. Of course it is inappropriate to use an excessively large amount of graphite, it is preferred that the content of graphite in the powder composition (and naturally in the sintered body, too) falls in the range from 2.0 to 10.0% by weight of the powder composition. When the content of graphite is less than 2% the expected effect of graphite is hardly appreciable from a practical point of view. On the other hand, the existence of more than 10% of graphite causes the mechanical strength of the sintered body to considerably lower.

As an essential feature of the invention, the entire quantity of graphite is incorporated into the powder mixture in the form of particles individually coated with copper. A suitable Cu-coated graphite powder can be obtained by, for example, electroless copper plating of a graphite powder. It is desired that the entire surfaces of the individual particles of the graphite powder be coated with copper. To satisfy this desire, it is preferred to perform the copper coating to such extent that the content of Cu in the Cu-coated graphite powder becomes at least 20% by weight.

A primary purpose of using such a Cu-coated graphite powder is to prevent graphite particles from adhering to the surfaces of the particles of aluminum or its alloy used as the principal material for a sintered body and then acting as a sort of sintering inhibitor. However, the copper present on the surfaces of the graphite powder exhibits additional but no less important effects at the stage of sintering a compact of the powder mixture. During sintering, this copper and aluminum as the principal component of the powder mixture react with each other and diffuse into each other to form a liquid phase when the sintering temperature is above an eutectic temperature (548°C at the eutectic point of 67%Al-33%Cu). This liquid phase is quite effective for smooth proceeding of good sintering. Furthermore the resultant sintered body contain aluminum-copper solid solutions which enhance the hardness and mechanical strength of the sintered body and offer the possibility of further improving the mechanical properties of the sintered body by a suitable heat treatment. Still further, copper in the sintered body serves the function of firmly retaining the graphite particles thereby greatly decreasing the possibility of separation of the graphite particles from the working surface of the sintered body in its practical use.

In view of such favorable effects of copper, it is optional to add a copper powder to the fundamental mixture of aluminum powder or aluminum alloy powder and Cu-coated graphite powder in order to desirably adjust the amount of total copper in the sintered body. However, the use of an excessively large amount of copper results in lowering of the dimensional accuracy and/or mechanical strength of the sintered body because of an unduly increased amount of liquid phase at the stage of sintering. Accordingly the total amount of copper in the powder mixture to be sintered is in the range from 2.0 to 10.0% by weight of the powder mixture.

A practically pure aluminum powder is of use as the aluminum component of the raw materials in a method of the invention, but it is optional to use a suitable aluminum alloy powder in place of an aluminum powder, or jointly with an aluminum powder. Alloys of aluminum with copper, magnesium and/or silicon are particularly suitable to this use.

To enhance abrasion resistance of the sintered body, particularly during its movement under high load conditions, it is requisite to incorporate silicon into the powder mixture to be sintered. The effect of silicon on the abrasion resistance is practically appreciable when the powder mixture contains at least 0.5% by weight of Si and augments as the content of Si increases. However, there is a tendency that the tensile strength of the sintered body lowers as the Si content increases, and therefore it is inappropriate to increase the content of Si in the powder mixture beyond 25% by weight. It is favorable to a method of the invention that Al-Cu-Si ternary system has an eutectic temperature of 524°C. When the powder mixture is made to contain only less than 5% by weight of Si, it is possible and rather convenient to use a practically pure silicon powder as the source of Si. However, when the Si content is set at a value in the range from 5% to 25% by weight, it is preferred to use an aluminum-silicon alloy powder as the source of Si because this is quite effective for preventing significant lowering of the tensile strength of the sintered body with increase in the Si content. In this case it is preferred that the content of Si in the Al-Si alloy is in the range from 15.0 to 30.0% by weight, that is, to use a 85/15 to 70/30 Al-Si alloy. The use of an Al-Si alloy containing less than 15% of Si is inefficient for enhancing the abrasion resistance of the product, but the use of an Al-Si alloy containing more than 30% of Si makes it difficult to obtain an accurately shaped and densely sintered body by compacting and sintering the powder mixture.

It is requisite to add the indicated amount of a magnesium powder to the powder mixture to be sintered, particularly when the powder mixture contains silicon. A first reason is that, during sintering of the compacted powder mixture, magnesium and aluminum react with each other and diffuse into each other to form a liquid phase at temperatures above a relatively low eutectic temperature, the liquid phase being effective for smooth proceeding of good sintering. Secondly, during sintering magnesium reacts with silicon added for the above described purpose to precipitate $Mg_2Si$ which is helpful for age hardening of the sintered body. These effects of magnesium are practically appreciable with little adverse effects when the content of Mg in the powder mixture is in the range from 0.2 to 2.0% by weight. The existence of more than 2.0% of Mg is undesirable for the same reason as the undesirableness of the existence of an excessively large amount of Cu.

Blending of the above described raw materials in the form of dry powders can be accomplished by a known method and apparatus. To facilitate the succeeding compacting operation, a very small amount of an organic solid or plastic lubricating agent may be added to the mixture of the above described powders.

After thorough blending, the powder mixture is compacted into a coherent mass of a desired shape by using a metal die set and a suitable pressing machine. The compacting operation is usually carried out at room temperature. Where the powder mixture contains a lubricating agent, it is recommended to adequately heat the compact in advance of its sintering in order to completely decompose the lubricating agent to gaseous substances and dissipate them.

Sintering of the compacted powder mixture is accomplished by sufficiently heating the compact in a dry and nonoxidizing gas atmosphere. In the present invention, the sintering temperature can be made below the melting point of Al, 660°C. In most cases, a suitable sintering temperature is in the range from about 530°C to about 620°C.

Optionally, the sintered body may be subjected to an aging heat treatment or an age hardening treatment. If necessary, the sintered body may be subjected to additional cold or hot compression. Depending on the intended use of the sintered body, the micropores in the sintered body may be impregnated with oil.

The invention will be further illustrated by the following nonlimitative examples.

Example 1

Use was made of a graphite powder of which particle size was adjusted such that all the particles passed through 100-mesh sieve (0.147 mm openings) but retained on 325-mesh sieve (0.043 mm openings). The same graphite powder was used throughout the succeeding examples and comparative experiments.

The surfaces of the particles of this graphite powder were coated with copper by the following process. First the graphite powder was subjected to degreasing by immersion in an aqueous solution of potassium dichromate and sulfuric acid. After that, the graphite powder was immersed in an aqueous solution of stannous chloride and hydrochloric acid for the purpose of sensitizing the particles surfaces and then immersed in an aqueous solution of palladium chloride and hydrochloric acid to activate the particles surfaces. The activated graphite powder was immersed in a conventional electroless copper-plating solution to deposit copper on the surfaces of the individual particles. In this example, the electroless plating process was performed such that the weight of the deposited copper reached the weight of the graphite powder. That is, the copper-coated graphite powder contained 50% by weight of Cu. The particle size of the Cu-coated graphite powder was adjusted such that all the particles passed through 100-mesh sieve but retained on 325-mesh sieve.

An aluminum powder used in this example (and also in the succeeding examples and comparative experiments) had a purity of at least 99.7% by weight, and all the particles of this aluminum powder passed through 80-mesh sieve (0.175 mm openings).

To prepare a powder mixture to be sintered, 90.0 parts by weight of the aluminum powder and 10.0 parts by weight of the Cu-coated graphite powder were blended in a conventional V-shaped blender for a period of 20 min, with the addition of wax amounting to 1.0% by weight of the total of the blended powders as a lubricating agent to facilitate subsequent pressing of the powder mixture. Since the Cu-coated graphite powder contained 50% by weight of Cu, this powder mixture consisted of 90.0% of aluminum, 5.0% of graphite and 5.0% of copper by weight, excluding the wax.

The thus prepared powder mixture was compacted in a metal die by application of a pressure of 5000 kg/cm² to form test pieces for tensile strength test by an Instron universal tester. Under the same pressing condition, differently shaped test pieces for Timken abrasion test were also formed.

Preparatory to sintering, the compacts were heated in a nitrogen gas atmosphere at 400°C for 1 hr to decompose and dissipate the wax used as lubricant. After this heat treatment the compacts were sintered in a nitrogen gas atmosphere, which had been dehumidified such that the dew point was below −40°C, for 1 hr at a sintering temperature of 560°C.

The sintered test pieces were maintained at a temperature of 505°C for 1 hr and immediately quenched in hot water maintained at 80°C, and the quenched test pieces were subjected to an aging treatment that was an 18 hr heat treatment at a constant temperature of 160°C.

The two groups of test pieces obtained through these procedures were subjected to tensile strength test by an Instron universal tension tester and abrasion test by a Timken tester, respectively. In the abrasion test, a ring made of gray cast iron (FC 20) was radially pressed against each test piece under a load of 9 kg and continuously rotated at a peripheral velocity of 2 m/sec for a period of 50 hr, while lubricating oil (No. 50 machine oil) was applied at a rate of 0.5 ml/min. The degree of abrasion of the test piece was expressed by the width of the trace of abrasion appeared on the surface of the test piece. The results of these tests are presented in the following Table 1 together with the data in the succeeding examples.

The examples and comparative experiments described hereafter are modifications of Example 1 in respect of the inventive composition of the powder mixture according to claim 1 subjected to sintering. Blending of the raw materials, compacting of powder mixture, sintering of the compacts, quenching and aging of the sintered test pieces and the tensile and abrasion tests were carried out in accordance with Example 1 unless noted specifically. The amounts of the ingredients are all given by weight. The compositions of the powder mixtures sintered in the examples and comparative experiments are shown in Tables 1 and 2.

Examples 2 and 3

In these examples, a silicon powder having a purity of at least 98.8% by weight and a magnesium powder having a purity of at least 99.5% by weight were added to the powder mixture of aluminum and Cu-coated graphite. The particles of the silicon powder passed through 325-mesh sieve, and the particles of the magnesium powder passed through 200-mesh sieve (0.074 mm openings).

In Example 2, the powder mixture consisted of 10.0% of the Cu-coated graphite powder used in Example 1, 1.0% of the silicon powder, 0.5% of the magnesium powder and the balance (88.5%) of the aluminum powder. In Example 3, the amount of the silicon powder was increased to 4.0% with corresponding decrease of the aluminum powder to 85.5%. In example 3, the sintering temperature was lowered to 550°C, and the heating of the sintered test pieces for quenching was performed at 490°C for 1 hr. (The same modifications of the temperatures were made also in other examples and experiments in cases where more than 1% of Si was contained in the powder mixture.)

Example 4

A powder of an Al-Si alloy consisting of 85% of Al and 15% of Si was used in place of the silicon powder in Examples 2 and 3. The aluminum powder mentioned in Example 1 and the aforementioned silicon powder were used as the raw materials for this Al-Si alloy. The particles of this alloy powder passed through 80-mesh sieve.

A powder mixture prepared in this example contained 33.35% of the Al-Si alloy powder and 56.15% of the aluminum powder. Analytically, therefore, the content of Si in this mixture was 5.0% and the content of Al was 84.5% as shown in Table 1.

Examples 5 to 7

In place of the Al-Si alloy mentioned in Example 4, use was made of an Al-Si alloy which consisted of 80% of Al and 20% of Si and was pulverized into particles that passed through 80-mesh sieve.

The powder mixture of Example 5 contained 35.0% of the Al-Si alloy powder and 54.5% of the aluminum powder and, therefore, 7.0% of Si and 82.5% of Al when expressed analytically. In Example 6, the amount of the Al-Si alloy powder was increased to 60.0% to increase the Si content to 12.0% with corresponding decrease in the amount of the aluminum powder to 29.5% to result in a decrease of the total content of Al to 77.5%. In Example 7, the amount of the Al-Si powder was increased to 89.5% to increase the Si content to 17.9%. In this case the aluminum powder was not used, so that the entire amount of Al (71.6%) was given by the Al-Si alloy.

Example 8

An Al-Si alloy powder consisting of 70% of Al and 30% of Si was used. The particles of this alloy passed through 80-mesh sieve. The powder mixture of this example contained 83.35% of the Al-Si alloy powder and 6.15% of the aluminum powder. Analytically, therefore, this mixture contained 25.0% of Si and 64.5% of Al.

Examples 9 and 10

These two examples were different from Example 2 only in that the amount of the Cu-coated graphite powder in the powder mixture was increased to 15.0% and 20.0%, respectively, with corresponding decreases in the amount of the aluminum powder.

Example 11

This example was different from Example 2 firstly in that the amount of the Cu-coated graphite powder in the powder mixture was decreased to 6.0% and secondly that a copper powder was added to the ingredients so as to occupy 2.0% of the powder mixture. The copper powder had a purity of at least 99.0% by weight, and the particles of this powder passed through 325-mesh sieve.

Examples 12 and 13

In these two examples, a Cu-coated graphite powder analytically consisting of 40% of graphite and 60% of copper was used in place of the Cu-coated graphite powder (50% Cu) in the foregoing examples. The particles of this Cu-coated graphite powder passed through 100-mesh sieve but retained on 325-mesh sieve. In Example 13, the content of Cu in the powder mixture was further increased by additionally using the copper powder mentioned in Example 11.

Examples 14 and 15

In these examples, a Cu-coated graphite powder analytically consisting of 80% of graphite and 20% of Cu was used. The particles of this Cu-coated graphite powder passed through 100-mesh sieve but retained on 325-mesh sieve. In both of these two examples, the copper powder mentioned in Example 11 was used as an additional ingredient of the powder mixture.

TABLE 1
Examples

| | Composition (wt%) | | | | | | | | Tensile strength (kg/mm$^2$) | Abrasion (mm) |
|---|---|---|---|---|---|---|---|---|---|---|
| | Cu-coated graphite (graphite/Cu) | Graphite | Free Cu | Total Cu | Si | Mg | Al | Source of Si | | |
| Ex.* 1 | 10.0 (50/50) | 5.0 | 0 | 5.0 | 0 | 0 | 90.0 | | 23 | 3.5 |
| Ex. 2 | 10.0 (50/50) | 5.0 | 0 | 5.0 | 1.0 | 0.5 | 88.5 | | 25 | 3.3 |
| Ex. 3 | 10.0 (50/50) | 5.0 | 0 | 5.0 | 4.0 | 0.5 | 85.5 | | 15 | 3.0 |
| Ex. 4 | 10.0 (50/50) | 5.0 | 0 | 5.0 | 5.0 | 0.5 | 84.5 | Al-Si (85-15) | 20 | 2.3 |
| Ex. 5 | 10.0 (50/50) | 5.0 | 0 | 5.0 | 7.0 | 0.5 | 82.5 | Al-Si (80-20) | 18 | 2.3 |
| Ex. 6 | 10.0 (50/50) | 5.0 | 0 | 5.0 | 12.0 | 0.5 | 77.5 | Al-Si (80-20) | 16 | 2.1 |
| Ex. 7 | 10.0 (50/50) | 5.0 | 0 | 5.0 | 17.9 | 0.5 | 71.6 | Al-Si (80-20) | 14 | 1.8 |
| Ex. 8 | 10.0 (50/50) | 5.0 | 0 | 5.0 | 25.0 | 0.5 | 64.5 | Al-Si (70-30) | 12 | 1.7 |
| Ex. 9 | 15.0 (50/50) | 7.5 | 0 | 7.5 | 1.0 | 0.5 | 83.5 | | 16 | 3.1 |
| Ex. 10 | 20.0 (50/50) | 10.0 | 0 | 10.0 | 1.0 | 0.5 | 78.5 | | 12 | 2.4 |
| Ex. 11 | 6.0 (50/50) | 3.0 | 2.0 | 5.0 | 1.0 | 0.5 | 90.5 | | 28 | 3.9 |
| Ex. 12 | 12.5 (40/60) | 5.0 | 0 | 7.5 | 1.0 | 0.5 | 86.0 | | 17 | 3.9 |
| Ex. 13 | 12.5 (40/60) | 5.0 | 2.5 | 10.0 | 1.0 | 0.5 | 83.5 | | 14 | 4.1 |
| Ex. 14 | 6.25 (80/20) | 5.0 | 1.75 | 3.0 | 1.0 | 0.5 | 90.5 | | 29 | 3.3 |
| Ex. 15 | 6.25 (80/20) | 5.0 | 6.75 | 8.0 | 1.0 | 0.5 | 85.5 | | 16 | 3.8 |

*Outside of the invention.

## Claims

1. A method of producing a sintered body which comprises aluminum as a principal material thereof and graphite as a lubricating additive, the method comprising the steps of:

preparing a powder mixture which comprises a minor amount of a graphite powder and a major amount of a metal powder comprising at least a major amount of aluminum, the surfaces of the particles of said graphite powder being coated with copper;

compacting said powder mixture into a desired shape; and

sintering the compacted powder mixture in a nonoxidizing gas atmosphere, characterised in that the content of graphite in said powder mixture is in the range from 2.0 to 10.0% by weight of said powder mixture;

that the content of copper in said powder mixture is in the range from 2.0 to 10.0% by weight;

that the content of copper in the copper-coated graphite powder is at least 20% by weight of the copper-coated graphite powder;

that said powder mixture further comprises magnesium amounting to 0.2 to 2.0% by weight of said powder mixture and in that said powder mixture further comprises silicon amounting to 0.5 to 25% by weight of said powder mixture.

2. A method according to claim 1, wherein said metal powder is an aluminum powder.

3. A method according to claim 1, wherein said silicon is substantially entirely in the form of a silicon powder, the content of said silicon in said powder mixture being not greater than 5% by weight.

4. A method according to claim 1, wherein said silicon is substantially entirely in the form of an aluminum silicon alloy powder, the content of said silicon in said powder mixture being in the range from 5 to 25% by weight.

5. A method according to claim 4, wherein the content of silicon in said aluminum-silicon alloy powder is in the range from 15.0 to 30.0% by weight.

6. A method according to claim 5, wherein said metal powder is a mixture of an aluminum powder and said aluminum-silicon alloy powder.

7. A method according to claim 5, wherein said metal powder is entirely said aluminum-silicon alloy powder.

8. A method according to claim 1, wherein said powder mixture further comprises a copper powder, the total content of copper in said powder mixture being in the range from 2.0 to 10.0% by weight of said powder mixture.

## Patentansprüche

1. Verfahren zum Herstellen eines gesinterten Körpers, welcher Aluminium als Hautpbestandteil und Graphit als Schmiermittelzusatz enthält, wobei das Verfahren die folgenden Schritte umfaßt:

Herstellen einer Pulvermischung, welche eine geringe Menge an Graphitpulver und eine vorherrschende Menge an einem Metallpulver, enthaltend wenigstens eine größere Aluminiummenge umfaßt, wobei die Oberflächen der Graphitpulverteilchen mit Kupfer bedeckt sind;

Verdichten der Pulvermischung zu einer angestrebten Gestalt und

Sintern der verdichteten Pulvermischung in einer nicht oxidierenden Gasatmosphäre, dadurch gekennzeichnet, daß der Graphitgehalt in der Pulvermischung im Bereich von 2,0 bis 10,0 Gew.-% der Pulvermischung liegt;

daß der Kupfergehalt der Pulvermischung im Bereich von 2,0 bis 10,0 Gew.-% liegt;

daß der Kupfergehalt des kupferbeschichteten Graphitpulvers wenigstens 20 Gew.-% des kupferbeschichteten Graphitpulvers ausmacht;

daß die Pulvermischung ferner Magnesium in einer Menge von 0,2 bis 2,0 Gew.-% der Pulvermischung enthält und daß die Pulvermischung derner Silicium in einer Menge von 0,5 bis 25 Gew.-% der Pulvermischung aufweist.

2. Verfahren nach Anspruch 1, worin das Metallpulver ein Aluminiumpulver ist.

3. Verfahren nach Anspruch 1, worin das Silicium im wesentlichen vollständig in der Form eines Siliciumpulvers vorliegt, wobei der Siliciumgehalt in dieser Pulvermischung nicht mehr als 5 Gew.-% beträgt.

4. Verfahren nach Anspruch 1, worin das Silicium im wesentlichen vollständig in Form eines Aluminium-Silicium-Legierungspulvers vorliegt, wobei der Gehalt an Silicium in dieser Pulvermischung im Bereich von 5 bis 25 Gew.-% liegt.

5. Verfahren nach Anspruch 4, worin der Siliciumgehalt in dem Aluminium-Silicium-Legierungspulver im Bereich von 15,0 bis 30,0 Gew.-% liegt.

6. Verfahren nach Anspruch 5, dadurch gekennzeichnet, daß das Metallpulver eine Mischung ist aus einem Aluminiumpulver und dem Aluminium-Silicium-Legierungspulver.

7. Verfahren nach Anspruch 5, worin das Metallpulver vollständig aus dem Aluminium-Silicium-Legierungspulver besteht.

8. Verfahren nach Anspruch 1, worin die Pulvermischung ferner ein Kupferpulver umfaßt, wobei der gesamtgehalt an Kupfer in der Pulvermischung im Bereich von 2,0 bis 10,0 Gew.-% der Pulvermischung liegt.

## Revendications

1. Procédé de fabrication d'un produit fritté qui comprend de l'aluminium comme matériau principal et du graphite comme additif de lubrification, le procédé comprenant les étapes de:

préparer un mélange de poudres qui comprend une quantité mineure d'une poudre de graphite et une quantité majeure d'une poudre de métal comprenant au moins une quantité majeure d'aluminium, les surfaces des particules de ladite poudre de graphite étant enrobées de cuivre;

tasser ledit mélange de poudres à une forme souhaitée; et

fritter le mélange de poudre tassée dans une atmosphère d'un gaz non oxydant, caractérisé en ce que la teneur en graphite dans ledit mélange de poudres est comprise entre 2,0 et 10,0% en poids dudit mélange de poudres;

en ce que la teneur en cuivre dans ledit mélange de poudres est comprise entre 2,0 et 10,0% en poids;

en ce que la teneur en cuivre dans la poudre de graphite enrobé de cuivre est d'au moins 20% en poids de la poudre de graphite enrobé de cuivre;

en ce que ledit mélange des poudres contient de plus du magnésium en une quantité de 0,2 à 2,0% en poids dudit mélange des poudres et en ce que ledit mélange des poudres contient de plus du silicium en une quantité de 0,5 à 25% en poids dudit mélange des poudres.

2. Procédé selon la revendication 1, où ladite poudre de métal est une poudre d'aluminium.

3. Procédé selon la revendication 1, où ledit silicium est sensiblement totalement sous la forme d'une poudre de silicium, la teneur dudit silicium dans ledit mélange des poudres ne dépassant pas 5% en poids.

4. Procédé selon la revendication 1, où ledit silicium est sensiblement totalement sous la forme d'une poudre d'un alliage d'aluminium silicium, la teneur en silicium dans ledit mélange de poudres étant comprise entre 5 et 25% en poids.

5. Procédé selon la revendication 4, où la teneur en silicium dans ladite poudre d'alliage aluminium-silicium est comprise entre 15,0 et 30,0% en poids.

6. Procédé selon la revendication 5, où ladite poudre de métal est un mélange d'une poudre d'aluminium et de ladite poudre d'alliage d'aluminium-silicium.

7. Procédé selon la revendication 5, où ladite poudre de métal est totalement ladite poudre d'un alliage aluminium-silicium.

8. Procédé selon la revendication 1, où ledit mélange de poudres comprend de plus une poudre de cuivre, la teneur totale du cuivre dans ledit mélange de poudres étant comprise entre 2,0 et 10,0% en poids dudit mélange des poudres.